# EUROPEAN PATENT APPLICATION

(11) **EP 4 836 126 A1**
(43) Date of publication of application: **04.11.2026**
(21) Application number: 24927987.8
(22) Date of filing: 01.08.2024
(51) Int. Cl.: H01M 50/24

(54) **BATTERY AND ELECTRIC DEVICE**

(30) Priority: 06.03.2024 CN 202420433311 U
(71) Applicant: Contemporary Amperex Technology Co., Limited, Ningde, Fujian 352100 (CN)
(72) Inventor: YAO, Pengcheng, Ningde, Fujian 352100 (CN); WANG, Peng, Ningde, Fujian 352100 (CN); CHEN, Xingdi, Ningde, Fujian 352100 (CN)
(74) Representative: Kraus & Lederer PartGmbB
(86) International application number: PCT/CN2024/109263
(87) International publication number: WO 2025/185054

(57) **Abstract**

A battery (10) and an electric device. The battery (10) comprises: a case (100) having a wall portion (110), wherein the wall portion (110) comprises a heat exchange plate (111) and a cover plate (112), which are stacked in a first direction, through holes passing through the heat exchange plate (111) and the cover plate (112) are provided in the wall portion (110), and the first direction is parallel to the direction of thickness of the wall portion (110); a battery cell (200) accommodated in the case (100); a power distribution assembly (300), which comprises a power distribution box (310) and connection terminals (320), wherein the connection terminals (320) are inserted into the through holes and are connected to the power distribution box (310) and the battery cell (200); and a sealing assembly (400), which is located between the heat exchange plate (111) and the cover plate (112) and is configured to seal the through holes. The battery (10) has a relatively good sealing effect, and the probability of a leakage of a chemical component inside the battery (10) can be reduced.

## Description

### CROSS-REFERENCE TO RELATED APPLICATIONS

The present application claims priority to Chinese Patent Application No. 202420433311.6, filed with the China National Intellectual Property Administration on March 6, 2024 and entitled "BATTERY AND POWER CONSUMING APPARATUS", which is incorporated herein by reference in its entirety.

### TECHNICAL FIELD

The present application relates to the technical field of batteries, and in particular, to a battery and a power consuming apparatus.

### BACKGROUND

Energy conservation and emission reduction are the key to the sustainable development of the automobile industry, and electric vehicles have become an important part of the sustainable development of the automobile industry due to their advantages of energy conservation and environment protection. For the electric vehicles, the battery technology is an important factor that relates to the development of the electric vehicles.

However, in the related art, the sealing effect inside the battery is relatively poor, which easily leads to leakage of chemical components inside the battery, affecting the reliability of the battery.

### SUMMARY

In view of the above problem, the present application provides a battery and a power consuming apparatus. The battery has a better sealing effect, and the probability of leakage of chemical components inside the battery can be reduced, thereby ensuring the reliability of the battery.

According to a first aspect, an embodiment of the present application provides a battery. The battery includes a box body, a battery cell, a power distribution assembly, and a sealing assembly. The box body has a wall portion. The wall portion includes a heat exchange plate and a cover plate stacked along a first direction. Through holes passing through the heat exchange plate and the cover plate are provided in the wall portion. The first direction is parallel to a thickness direction of the wall portion. The battery cell is accommodated in the box body. The power distribution assembly includes a power distribution box and connection terminals. The connection terminals are inserted into the through holes and are connected to the power distribution box and the battery cell. The sealing assembly is located between the heat exchange plate and the cover plate and configured to seal the through holes.

According to the battery provided in the embodiment of the present application, by providing the through holes passing through the heat exchange plate and the cover plate in the wall portion of the box body, the connection terminals can be inserted into the through holes and be connected to the power distribution assembly and the battery cell, thereby ensuring connection demands of the battery cell and the power distribution assembly, and further ensuring charging and discharging functions of the battery. The correspondingly disposed sealing assembly can achieve the sealing of the through holes of the heat exchange plate and the cover plate, so that the entire battery is in a sealed state, and an internal environment of the battery is not disturbed by an external environment, thereby ensuring the normal operation of the battery; and the probability of leakage of chemical components inside the battery can be reduced, thereby ensuring the reliability of the battery.

In some embodiments, a plurality of through holes are provided. The plurality of through holes are disposed at intervals, and an orthographic projection of the sealing assembly is disposed around orthographic projections of the through holes along the first direction.

According to the battery provided in the embodiment of the present application, by providing a plurality of through holes, an inserting demand of a plurality of connection terminals in practical application can be satisfied, and an electrical connection demand between the power distribution box and the battery cell can be ensured. In addition, by disposing the orthographic projection of the sealing assembly around the orthographic projections of the through holes along the first direction, the through holes can be sealed and surrounded, thereby improving the sealing guarantee.

In some embodiments, the number of the sealing assemblies is the same as the number of the through holes. The plurality of sealing assemblies are disposed at intervals, and the orthographic projection of each sealing assembly is disposed around the orthographic projection of one through hole along the first direction.

According to the battery provided in the embodiment of the present application, by disposing the orthographic projection of each sealing assembly around the orthographic projection of one through hole along the first direction, each sealing assembly can seal one through hole while ensuring basic sealing requirements, and an adaptive sealing assembly can be selected according to a shape and position of the through hole, thereby satisfying a sealing level.

In some embodiments, the number of the sealing assemblies is less than the number of the through holes. The orthographic projection of at least one sealing assembly is disposed around the orthographic projections of at least two through holes along the first direction.

According to the battery provided in the embodiment of the present application, the plurality of through holes can be sealed through the sealing assemblies, and through holes disposed adjacently can be placed in a same sealing assembly according to a distribution situation of the through holes, so that in the case of ensuring a sealing demand, the assembly difficulty and costs can be reduced. In addition, when some of the sealing assemblies fail, only some of the sealing assemblies are replaced, thereby reducing the maintenance costs.

In some embodiments, one sealing assembly is provided, and the orthographic projection of the sealing assembly is disposed around the orthographic projections of the plurality of through holes along the first direction; or two or more sealing assemblies are provided, and at least one sealing assembly is disposed around the orthographic projections of the plurality of through holes along the first direction.

According to the battery provided in the embodiment of the present application, the sealing of the plurality of through holes is achieved through one sealing assembly, thereby improving the assembly efficiency of the sealing assembly.

In some embodiments, the sealing assembly includes a sealing ring. Along the first direction, a thickness size of the sealing ring is D1, and 0.2 mm ≤ D1 ≤ 5 mm.

According to the battery provided in the embodiment of the present application, by providing the sealing ring, better sealing performance can be ensured after the sealing assembly is added, and the structure of the sealing ring is convenient for mounting.

In some embodiments, the sealing assembly includes a sealing gasket. Along the first direction, a thickness size of the sealing gasket is D2, and 1 mm ≤ D2 ≤ 20 mm.

According to the battery provided in the embodiment of the present application, by providing the sealing gasket, as the sealing gasket has a better deformation amount, it is convenient to adjust a thickness of the sealing assembly, and the sealing assembly can be disposed more flexibly.

In some embodiments, the sealing assembly includes a sealant. Along the first direction, a thickness size of the sealant is D3, and 0.2 mm ≤ D3 ≤ 5 mm.

According to the battery provided in the embodiment of the present application, by providing the sealant, when the sealing assembly is mounted, a sealant binding process is adopted for mounting. Since the sealant is a fluid during use, it is convenient to adjust a shape of the sealant, and a use amount of the sealant can be adjusted. In addition, the sealant can further fix positions of the heat exchange plate and the cover plate.

In some embodiments, at least one of the cover plate and the heat exchange plate includes a sealing groove matching a shape of the sealing assembly, and at least a part of the sealing assembly is located in the sealing groove.

According to the battery provided in the embodiment of the present application, by providing the sealing groove, it is convenient to implement position limiting and mounting of the sealing assembly, and the mounting firmness of the sealing assembly can be enhanced, thereby preventing the sealing assembly from moving between the heat exchange plate and the cover plate and affecting the sealing performance.

According to a second aspect, an embodiment of the present application further provides a power consuming apparatus, which includes the battery according to any one of the above embodiments.

According to the power consuming apparatus provided in the embodiment of the present application, the battery includes the sealing assembly, so that the probability of performance reduction caused by poor sealing of the battery can be reduced, and the user experience of the power consuming apparatus can be improved.

The above description is only an overview of the technical solutions of the present application. To understand the technical means of the present application more clearly such that it can be implemented according to the content of the specification, and to make the above-mentioned and other purposes, features, and advantages of the present application more apparent, specific implementations of the present application are listed below.

### BRIEF DESCRIPTION OF THE DRAWINGS

Various other advantages and benefits become clear to those of ordinary skill in the art by reading the following detailed description of preferred implementations. The accompanying drawings are merely used for illustrating the preferred implementations and are not intended to constitute a limitation on the present application. Throughout the accompanying drawings, the same reference numerals are used for representing the same components. In the figures:
FIG. 1 is a schematic structural diagram of an embodiment of a vehicle according to the present application;
FIG. 2 is an explosive schematic view of an embodiment of a battery according to the present application;
FIG. 3 is a schematic top view of an embodiment of a battery according to the present application;
FIG. 4 is a schematic top view of partial structure of an embodiment of a battery according to the present application;
FIG. 5 is a schematic top view of partial structure of another embodiment of a battery according to the present application;
FIG. 6 is a schematic cross-sectional view of an embodiment of a battery according to the present application; and
FIG. 7 is a schematic enlarged view of part A in FIG. 6 according to the present application.

Reference numerals in specific implementations are as follows:
1. vehicle;
10. battery; 20. motor; 30. controller;
100. box body; X. first direction;
110. wall portion; 111. heat exchange plate; 112. cover plate;
200. battery cell;
300. power distribution assembly; 310. power distribution box; 320. connection terminal; and
400. sealing assembly.

### DETAILED DESCRIPTION

Embodiments of technical solutions of the present application will be described in detail below with reference to the accompanying drawings. The following embodiments are only used for illustrating the technical solutions of the present application more clearly, and thus are only interpreted as examples, rather than used for limiting the protection scope of the present application.

It should be noted that, unless otherwise specified, the technical or scientific terms used in the embodiments of the present application should have the usual meanings as understood by those skilled in the art to which the embodiments of the present application belong.

In the description of the embodiments of the present application, the orientation or position relationships indicated by technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on orientation or position relationships shown in the accompanying drawings, and are intended to facilitate the description of the embodiments of the present application and simplify the description only, rather than indicate or imply that the apparatus or element referred to should have a particular orientation or be constructed and operated in a particular orientation, and therefore are not to be interpreted as limitations on the embodiments of the present application.

Furthermore, the technical terms such as "first" and "second" are used merely for the purpose of description, and shall not be construed as indicating or implying relative importance or implying a quantity of indicated technical features. In the description of the embodiments of the present application, "a plurality of" means two or more, unless otherwise expressly and specifically defined.

In the description of the embodiments of the present application, unless otherwise explicitly specified and defined, the technical terms such as "mounting", "connecting", "connection" and "fixing" should be understood in a broad sense. For example, a connection may be a fixed connection, a detachable connection, or an integrated connection; may be a mechanical connection or an electric connection; or may be a direct connection, an indirect connection through an intermediate medium, an internal communication between two elements, or an interaction relationship between two elements. For those of ordinary skill in the art, the specific meanings of the above terms in the embodiments of the present application can be understood according to specific situations.

In the description of the embodiments of the present application, unless otherwise explicitly specified and defined, a first feature being located "above" or "below" a second feature may be the first feature being in direct contact with the second feature, or the first feature being in indirect contact with the second feature through an intermediate medium. Moreover, a situation that the first feature is "above", "over", or "on" the second feature may indicate that the first feature is directly above or obliquely above the second feature, or may merely indicate that the horizontal position of the first feature is higher than that of the second feature. A situation that the first feature is "below", "under", and "beneath" the second feature may indicate that the first feature is directly below or obliquely below the second feature, or may merely indicate that the horizontal position of the first feature is lower than that of the second feature.

At present, from the perspective of development of the market situation, the application of power batteries becomes increasingly extensive. Power batteries are not only used in energy storage power systems such as hydro, thermal, wind, and solar power stations, but also widely used in electric transportation tools such as electric bicycles, electric motorcycles and electric vehicles, and used in many other fields such as military equipment and aerospace. With the continuous expansion of the application fields of power batteries, the market demand thereof is also constantly expanding.

A battery mentioned in an embodiment of the present application refers to a single physical module that includes one or more battery cells to provide a higher voltage and capacity. For example, the battery mentioned in the present application may include a battery module, a battery pack, or the like. The battery generally includes a box body for packaging one or more battery cells. The box body can prevent liquids or other foreign matters from affecting the charging or discharging of the battery cell.

In the embodiments of the present application, the battery cell may be a secondary battery cell. The secondary battery cell refers to a battery cell of which an active material can be activated by means of charging for further use after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-hydrogen battery cell, a nickel-cadmium battery cell, a lead storage battery cell, or the like, which is not limited in the embodiments of the present application.

Energy conservation and emission reduction are the key to the sustainable development of the automobile industry, and electric vehicles have become an important part of the sustainable development of the automobile industry due to their advantages of energy conservation and environment protection. For the electric vehicles, the battery technology is an important factor that relates to the development of the electric vehicles. However, in the related art, the sealing effect inside the battery is relatively poor, which easily leads to leakage of chemical components inside the battery, affecting the reliability of the battery.

To solve the problem in the related art that a sealing effect inside a battery is poor, which easily leads to leakage of chemical components inside the battery, it is found through research that the above problem can be solved by arranging a sealing assembly inside the battery.

The battery provided in the embodiments of the present application is applicable to a power consuming apparatus using a battery.

The power consuming apparatus mentioned in the embodiments of the present application may be a vehicle, a mobile phone, a portable device, a notebook computer, a ship, a spacecraft, an electric toy, an electric tool, or the like. Vehicles may be fuel vehicles, gas vehicles, or new energy vehicles. New energy vehicles may be all-electric vehicles, hybrid vehicles, or extended-range vehicles. Spacecrafts include aircrafts, rockets, space shuttles, spaceships, and the like. Electric toys include fixed or mobile electric toys, such as game machines, electric vehicle toys, electric ship toys, and electric aircraft toys. Electric tools include metal cutting electric tools, grinding electric tools, assembling electric tools, and railway electric tools, such as electric drills, electric grinders, electric wrenches, electric screwdrivers, electric hammers, electric impact drills, concrete vibrators, and electric planers. The embodiments of the present application do not impose specific limitations on the above power consuming apparatus.

In the following embodiments, for the convenience of description, a vehicle is taken as the power consuming apparatus for description.

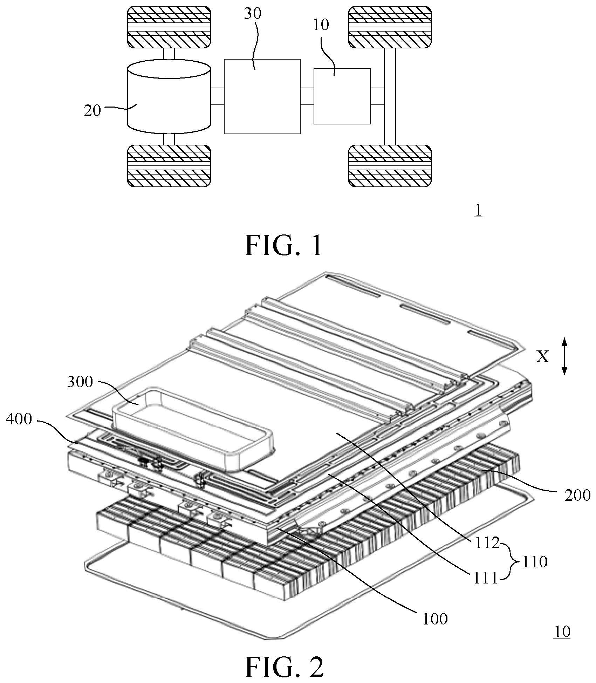

Referring to FIG. 1, a battery 10 is disposed inside a vehicle 1. The battery 10 may be disposed at the bottom, head, or tail of the vehicle 1. The battery 10 may be configured to supply power to the vehicle 1. For example, the battery 10 may be used as an operating power source of the vehicle 1. The vehicle 1 may further include a controller 30 and a motor 20. The controller 30 is configured to control the battery 10 to supply power to the motor 20, for example, to meet operating power requirements during starting, navigation, and traveling of the vehicle 1.

In some embodiments of the present application, the battery 10 can not only serve as the operating power source of the vehicle 1, but also serve as a driving power source of the vehicle 1, in place of or partially in place of fuel or natural gas, to provide driving power for the vehicle 1.

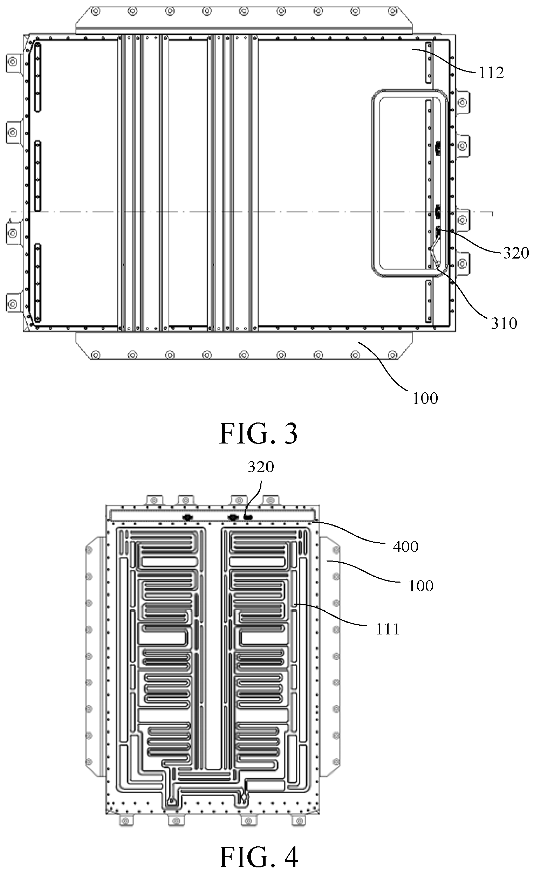

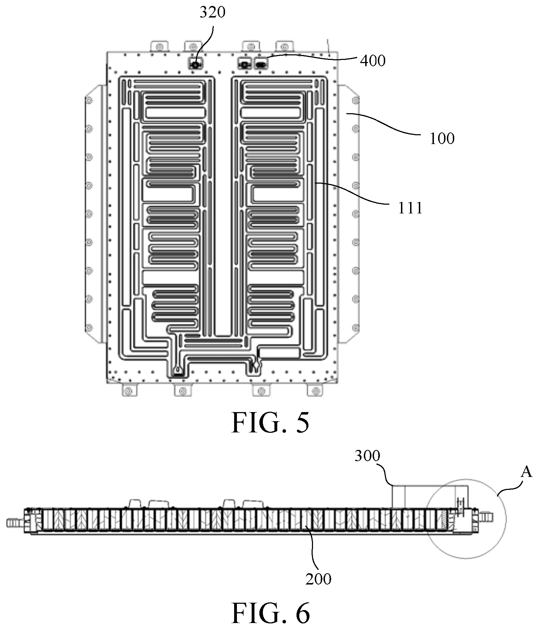

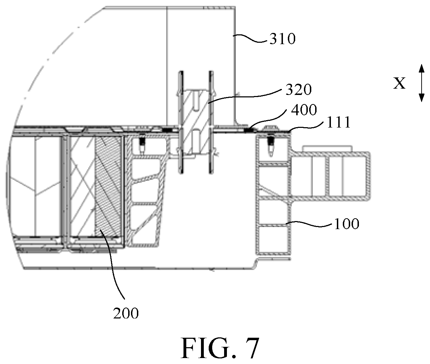

Referring to FIG. 2 to FIG. 7, an embodiment of the present application provides a battery 10. The battery 10 includes a box body 100, a battery cell 200, a power distribution assembly 300, and a sealing assembly 400. The box body 100 has a wall portion 110. The wall portion 110 includes a heat exchange plate 111 and a cover plate 112 stacked along a first direction X. Through holes passing through the heat exchange plate 111 and the cover plate 112 are provided in the wall portion 110. The first direction X is parallel to a thickness direction of the wall portion 110. The battery cell 200 is accommodated in the box body 100. The power distribution assembly 300 includes a power distribution box 310 and connection terminals 320. The connection terminals 320 are inserted into the through holes and are connected to the power distribution box 310 and the battery cell 200. The sealing assembly 400 is located between the heat exchange plate 111 and the cover plate 112 and configured to seal the through holes.

The box body 100 can prevent liquids or other foreign matters from affecting the charging or discharging of the battery cell 200. The box body 100 may be used as a part of a chassis structure of the vehicle 1. For example, a part of the box body 100 may form at least a part of a floor of the vehicle 1, or a part of the box body 100 may form at least a part of a transverse beam and a longitudinal beam of the vehicle 1.

The number of the through holes may be one, two, or even more. A shape of the through hole includes, but is not limited to, a rectangle, a circle, or another special shape. Optionally, a shape of the connection terminal 320 is matched with the shape of the through hole.

The sealing assembly 400 includes a structure such as a sealing ring or a sealing gasket. A material of the sealing assembly 400 includes, but is not limited to, an adhesive material, a rubber material, or the like.

The sealing assembly 400 is sandwiched between the heat exchange plate 111 and the cover plate 112. If a shape of the heat exchange plate 111 is the same as a shape of the cover plate 112 along the first direction X, a shape of the sealing assembly 400 may also be the same as the shape of the heat exchange plate 111 or the cover plate 112.

In some embodiments, a flow channel for a heat exchange medium to flow is provided inside the heat exchange plate 111. As an example, the heat exchange medium may be liquid or gas, for example water.

Optionally, the power distribution box 310 of the power distribution assembly 300 is located on one side of the cover plate 112 away from the heat exchange plate 111. The cover plate 112 and the power distribution box 310 enclose to form a chamber. The power distribution assembly 300 further includes an electrical device. The electrical device is located inside the chamber. The electrical device is connected to the battery cell 200 through the connection terminals 320. The power distribution assembly 300 may control the battery 10. As an example, the power distribution assembly 300 plays a role in protecting the battery 10 and transmitting power during charging and discharging of the battery 10.

The power distribution assembly 300 can perform high-voltage distribution on the battery 10. The power distribution assembly 300 uses a centralized power distribution solution, and is compact in structure arrangement, convenient in wiring layout, and convenient and fast in maintenance. According to system architecture requirements of different customers, the power distribution assembly 300 further needs to integrate some intelligent control and management units of a battery management system, so as to further simplify the complexity of power distribution of the entire power consuming apparatus.

The power distribution assembly 300 is located on one side of the cover plate 112 away from the heat exchange plate 111. When thermal runaway occurs inside the battery cell 200, the cover plate 112 and the heat exchange plate 111 can protect the power distribution assembly 300, thereby reducing a risk that a high-temperature material released inside the battery cell 200 damages the electrical device. The heat exchange plate 111 may further perform heat exchange with the power distribution assembly 300 through the cover plate 112, so as to adjust the temperature of the power distribution assembly 300. Disposing the power distribution assembly 300 outside the box body 100 may further increase the space utilization rate inside the battery 10, and facilitate the maintenance on the power distribution assembly 300.

According to the battery 10 provided in the embodiment of the present application, by providing the through holes passing through the heat exchange plate 111 and the cover plate 112 in the wall portion 110 of the box body 100, the connection terminals 320 can be inserted into the through holes and be connected to the power distribution assembly 300 and the battery cell 200, thereby ensuring connection demands of the battery cell 200 and the power distribution assembly 300, and further ensuring charging and discharging functions of the battery 10. The correspondingly disposed sealing assembly 400 can seal the through holes, so that the entire battery 10 is in a sealed state, and an internal environment of the battery 10 is not disturbed by an external environment, thereby ensuring the normal operation of the battery 10; and the probability of leakage of chemical components inside the battery 10 can be reduced, thereby ensuring the reliability of the battery 10.

In some embodiments, a plurality of through holes are provided The plurality of through holes are disposed at intervals, and an orthographic projection of the sealing assembly 400 is disposed around orthographic projections of the through hole along the first direction X.

The number of the through holes may be two, three or more.

The number of the sealing assemblies 400 may also be one, two or more, as long as the orthographic projection of the sealing assembly 400 is disposed around the orthographic projections of the through holes.

According to the battery 10 provided in the embodiment of the present application, by providing a plurality of through holes, an inserting demand of a plurality of connection terminals 320 in practical application can be satisfied, and an electrical connection demand between the power distribution box 310 and the battery cell 200 can be ensured. In addition, by disposing the orthographic projection of the sealing assembly 400 around the orthographic projections of the through holes along the first direction X, the through holes can be sealed and surrounded, thereby improving the sealing guarantee.

In some embodiments, the number of the sealing assemblies 400 is the same as the number of the through holes. The plurality of sealing assemblies 400 are disposed at intervals, and the orthographic projection of each sealing assembly 400 is disposed around the orthographic projection of one through hole along the first direction X.

Exemplarily, the number of the sealing assembly 400 may be one and the number of the through hole may be one, or the number of the sealing assemblies 400 may be three and the number of the through holes may be three, or the like.

The interval between the sealing assemblies 400 may be adjusted according to actual conditions.

According to the battery 10 provided in the embodiment of the present application, by disposing the orthographic projection of each sealing assembly 400 around the orthographic projection of one through hole along the first direction X, each sealing assembly 400 can seal one through hole while ensuring basic sealing requirements, and an adaptive sealing assembly 400 can be selected according to a shape and position of the through hole, thereby satisfying a sealing level.

In some embodiments, the number of the sealing assemblies 400 is less than the number of the through holes. The orthographic projection of at least one sealing assembly 400 is disposed around the orthographic projections of at least two through holes along the first direction X.

The number of the sealing assemblies 400 may be one, two, or the like.

Exemplarily, when one sealing assembly 400 and three through holes are provided, sealing can be achieved by disposing an orthographic projection of one sealing assembly 400 around orthographic projections of three through holes along the first direction X. When two sealing assemblies 400 and three through holes are provided, sealing of the three through holes can be achieved by disposing an orthographic projection of one sealing assembly 400 around orthographic projections of two adjacent through holes and disposing an orthographic projection of the other sealing assembly 400 around an orthographic projection of the remaining through hole along the first direction X.

According to the battery 10 provided in the embodiment of the present application, the plurality of through holes can be sealed through the sealing assembly 400, and through holes disposed adjacently can be placed in a same sealing assembly 400 according to a distribution situation of the through holes, so that in the case of ensuring a sealing demand, the assembly difficulty and costs can be reduced. In addition, when some of the sealing assemblies 400 fail, only some of the sealing assemblies 400 are replaced, thereby reducing the maintenance costs.

In some embodiments, one sealing assembly 400 is provided, and the orthographic projection of the sealing assembly 400 is disposed around the orthographic projections of the plurality of through holes along the first direction X; or two or more sealing assemblies 400 are provided, and at least one sealing assembly 400 is disposed around the orthographic projections of the plurality of through holes along the first direction X.

The number of the plurality of through holes may be two or more.

Exemplarily, when one sealing assembly 400 and three through holes are provided, sealing can be achieved by disposing an orthographic projection of one sealing assembly 400 around orthographic projections of three through holes along the first direction X.

According to the battery 10 provided in the embodiment of the present application, the sealing of a plurality of through holes is achieved through one sealing assembly 400, thereby improving the assembly efficiency of the sealing assembly 400.

In some embodiments, the sealing assembly 400 includes a sealing ring. Along the first direction X, a thickness size of the sealing ring is D1, and 0.2 mm ≤ D1 ≤ 5 mm.

A material of the sealing ring includes hard silicone, rubber, or the like. The deformation amount of the sealing ring is small.

Exemplarily, the thickness size of the sealing ring may be 0.2 mm, 1 mm, 2 mm, 3 mm, 4 mm, or 5 mm. Optionally, the thickness size of the sealing ring is 2 mm, which can satisfy a sealing requirement and does not occupy too much space, thereby increasing the space utilization rate. The thickness size of the sealing ring may be 0.2 mm, which can ensure a sealing requirement and does not occupy too much space. The thickness size of the sealing ring may be 5 mm, which can satisfy a sealing requirement and provide a buffering effect between the heat exchange plate 111 and the cover plate 112, thereby reducing the damage caused by a mechanical force.

According to the battery 10 provided in the embodiment of the present application, by providing the sealing ring, better sealing performance can be ensured after the sealing assembly 400 is added, and the structure of the sealing ring is convenient for mounting.

In some embodiments, the sealing assembly 400 includes a sealing gasket. A thickness size of the sealing gasket is D2, and 1 mm ≤ D2 ≤ 20 mm.

A material of the sealing gasket includes a silicon series foam material, or the like.

Optionally, for example, along the first direction X, a thickness of the sealing gasket is between 1 mm and 20 mm. The thickness size of the sealing gasket is 1 mm, 5 mm, 10 mm, 15 mm, or 20 mm. Exemplarily, the thickness size of the sealing gasket is 1 mm, which can save the space of the sealing assembly 400 and ensure a sealing effect. The thickness size of the sealing gasket is 10 mm, which can support the heat exchange plate 111 and the cover plate 112 and provide certain buffering effect. The thickness size of the sealing gasket is 20 mm, which can achieve a better sealing effect and improve a damping effect between the heat exchange plate 111 and the cover plate 112.

According to the battery 10 provided in the embodiment of the present application, by providing the sealing gasket, as the sealing gasket has a better deformation amount, it is convenient to adjust a thickness of the sealing assembly 400, and the sealing assembly 400 can be disposed more flexibly.

In some embodiments, the sealing assembly 400 includes a sealant structure. Along the first direction X, a thickness size of the sealant is D3, and 0.2 mm ≤ D3 ≤ 5 mm.

Optionally, along the first direction X, a thickness of the sealant may be 0.2 mm, 1 mm, 2 mm, 3 mm, 4 mm, or 5 mm. Exemplarily, when the thickness size of the sealant is 0.2 mm, occupation of the space between the heat exchange plate 111 and the cover plate 112 by the sealant can be reduced, so that the battery 10 has a compact structure. When the thickness size of the sealant is 3 mm, the sealant does not occupy excessive space between the heat exchange plate 111 and the cover plate 112, and can provide certain supporting and buffering effects between the heat exchange plate 111 and the cover plate 112. When the thickness size of the sealant is 5 mm, a reliable sealing effect can be exerted, and a supporting effect can be provided between the heat exchange plate 111 and the cover plate 112.

According to the battery 10 provided in the embodiment of the present application, by providing the sealant, when the sealing assembly 400 is mounted, a sealant binding process is adopted for mounting. Since the sealant is a fluid during use, it is convenient to adjust a shape of the sealant, and a use amount of the sealant can be adjusted. In addition, the sealant can further fix positions of the heat exchange plate 111 and the cover plate 112.

In some embodiments, at least one of the cover plate 112 and the heat exchange plate 111 includes a sealing groove matching a shape of the sealing assembly 400, and at least a part of the sealing assembly 400 is located in the sealing groove.

A shape of the sealing groove includes an annular groove, a rectangular groove, or the like. The shape of the sealing groove needs to match the shape of the sealing assembly 400. The sealing groove and the sealing assembly 400 may be in interference fit.

According to the battery 10 provided in the embodiment of the present application, by providing the sealing groove, it is convenient to implement position limiting and mounting of the sealing assembly 400, and the mounting firmness of the sealing assembly 400 can be enhanced, thereby preventing the sealing assembly 400 from moving between the heat exchange plate 111 and the cover plate 112 and affecting the sealing performance.

An embodiment of the present application further provides a power consuming apparatus, which includes the battery 10 according to any one of the above embodiments.

According to the power consuming apparatus provided in the embodiment of the present application, the battery 10 includes the sealing assembly 400, so that the probability of performance reduction caused by poor sealing of the battery 10 can be reduced, and the user experience of the power consuming apparatus can be improved.

Finally, it should be noted that the above embodiments are only used for illustrating the technical solution of the present application, rather than for limiting. Although the present application has been described in detail with reference to the above embodiments, it should be understood by those of ordinary skill in the art that the technical solution described in the above embodiments can still be modified or some or all of the technical features thereof can be equivalently replaced. However, these modifications or substitutions do not depart the essence of the corresponding technical solution from the scope of the technical solutions of the embodiments of the present application, and should be covered in the scope of the claims and specification of the present application. In particular, the various technical features mentioned in the various embodiments can be combined in any way provided that there is no structural conflict. The present application is not limited to the specific embodiments disclosed herein, but includes all technical solutions that fall within the scope of the claims.

## Claims

1. A battery, comprising:
a box body, having a wall portion, wherein the wall portion comprises a heat exchange plate and a cover plate stacked along a first direction, through holes passing through the heat exchange plate and the cover plate are provided in the wall portion, and the first direction is parallel to a thickness direction of the wall portion;
a battery cell, accommodated in the box body;
a power distribution assembly, comprising a power distribution box and connection terminals, wherein the connection terminals are inserted into the through holes and are connected to the power distribution box and the battery cell; and
a sealing assembly, located between the heat exchange plate and the cover plate and configured to seal the through holes.

2. The battery according to claim 1, wherein a plurality of through holes are provided, the plurality of through holes are disposed at intervals, and an orthographic projection of the sealing assembly is disposed around orthographic projections of the through holes along the first direction.

3. The battery according to claim 2, wherein the number of the sealing assemblies is the same as the number of the through holes, the plurality of sealing assemblies are disposed at intervals, and the orthographic projection of each sealing assembly is disposed around the orthographic projection of one through hole along the first direction.

4. The battery according to claim 2, wherein the number of the sealing assemblies is less than the number of the through holes, and the orthographic projection of the sealing assembly is disposed around the orthographic projections of at least two through holes along the first direction.

5. The battery according to claim 4, wherein one sealing assembly is provided, and the orthographic projection of the sealing assembly is disposed around the orthographic projections of the plurality of through holes along the first direction;
or two or more sealing assemblies are provided, and at least one sealing assembly is disposed around the orthographic projections of the plurality of through holes along the first direction.

6. The battery according to any one of claims 1 to 5, wherein the sealing assembly comprises a sealing ring, along the first direction, a thickness size of the sealing ring is D1, and 0.2 mm ≤ D1 ≤ 5 mm.

7. The battery according to any one of claims 1 to 5, wherein the sealing assembly comprises a sealing gasket, along the first direction, a thickness size of the sealing gasket is D2, and 1 mm ≤ D2 ≤ 20 mm.

8. The battery according to any one of claims 1 to 5, wherein the sealing assembly comprises a sealant, along the first direction, a thickness size of the sealant is D3, and 0.2 mm ≤ D3 ≤ 5 mm.

9. The battery according to any one of claims 1 to 5, wherein at least one of the cover plate and the heat exchange plate comprises a sealing groove matching a shape of the sealing assembly, and at least a part of the sealing assembly is located in the sealing groove.

10. A power consuming apparatus, comprising the battery according to any one of claims 1 to 9.
